# EUROPEAN PATENT APPLICATION

(11) **EP 4 811 702 A1**
(43) Date of publication of application: **23.09.2026**
(21) Application number: 24892816.0
(22) Date of filing: 04.07.2024
(51) Int. Cl.: H04L 5/00

(54) **REFERENCE SIGNAL CONFIGURATION INFORMATION SENDING METHOD, REFERENCE SIGNAL CONFIGURATION INFORMATION RECEIVING METHOD, APPARATUS AND STORAGE MEDIUM**

(30) Priority: 22.11.2023 CN 202311581269
(71) Applicant: ZTE CORPORATION, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/103655
(87) International publication number: WO 2025/107652

(57) **Abstract**

The embodiments of the present disclosure relate to the technical field of communications. Provided are a reference signal configuration information sending method, a reference signal configuration information receiving method, an apparatus and a storage medium. The reference signal configuration information sending method comprises: acquiring port description information; on the basis of the port description information, generating reference signal configuration information; and sending the reference signal configuration information.

## Description

### CROSS REFERENCE

The present application claims priority to Chinese Patent Application No. 202311581269.9, titled "Reference Signal Configuration Information Sending Method and Receiving Method, Apparatus and Storage Medium", filed with the China National Intellectual Property Administration on November 22, 2023, the entire content of which is incorporated herein by reference.

### TECHNICAL FIELD

The present disclosure relates to the field of communication technologies, and in particular, to a reference signal configuration information sending method and receiving method, an apparatus and a storage medium.

### BACKGROUND

Multi-antenna technology can effectively improve the performance of wireless communication systems and is widely applied in various wireless communication systems. As mobile communication (including but not limited to fifth generation communication technology and enhanced technologies thereof, sixth generation communication technology, as well as future and existing other mobile communication systems) imposes increasingly stringent requirements on transmission rates, arrays with a larger number of ports (also referred to as antennas) may appear, such as 48 ports, 64 ports, 128 ports, or even 256 ports, and the like. However, as the number of ports increases, the overhead requirement for reference signals becomes larger and larger.

A current solution is to perform downsampling processing on an N-port reference signal to transform the N-port reference signal into an M-port reference signal, then transmit the M-port reference signal. The receiver receives the M-port reference signal, measures and obtains M-port channel information, and uses advanced information processing technology (including but not limited to artificial intelligence technology) to process the obtained M-port channel information to obtain N-port channel information, where N is greater than M, and both N and M are positive integers, thereby achieving the purpose of saving reference signal overhead. However, the terminal and the base station may have inconsistent understandings of the mapping from M ports to N ports and the value of M, which may result in the inability to accurately obtain N-port channel information from M-port channel information.

### SUMMARY

The embodiments of the present disclosure provide a reference signal configuration information sending method and receiving method, an apparatus, and a storage medium.

In an aspect, there is provided a reference signal configuration information sending method, applied to a first node, where the method includes: acquiring port description information; generating reference signal configuration information according to the port description information; and sending the reference signal configuration information.

In another aspect, there is provided a reference signal configuration information receiving method, applied to a second node, where the method includes: receiving reference signal configuration information; and receiving a reference signal according to the reference signal configuration information.

In yet another aspect, there is provided a communication apparatus, including: an acquisition module, a generation module, and a sending module. The acquisition module is configured to acquire port description information; the generation module is configured to generate reference signal configuration information according to the port description information; and the sending module is configured to send the reference signal configuration information.

In yet another aspect, there is provided a communication apparatus, including: a receiving module. The receiving module is configured to receive reference signal configuration information and receive a reference signal according to the reference signal configuration information.

In yet another aspect, there is provided a computer-readable storage medium. The computer-readable storage medium stores computer program instructions, where the computer program instructions, upon being executed by a processor, implement the reference signal configuration information sending method or the reference signal configuration information receiving method according to any one of the embodiments described above.

In yet another aspect, there is provided a computer program product. The computer program product includes computer program instructions, where the computer program instructions, upon being executed by a processor, implement the reference signal configuration information sending method or the reference signal configuration information receiving method according to any one of the embodiments described above.

### BRIEF DESCRIPTION OF THE DRAWINGS

To illustrate the technical solutions in the present disclosure more clearly, the following briefly introduces the drawings needed for usage in some embodiments of the present disclosure. Obviously, the drawings in the following description are merely drawings of some embodiments of the present disclosure, and for those of ordinary skill in the art, other drawings may be obtained based on these drawings.
FIG. 1 is a schematic diagram of channel processing provided by some embodiments of the present disclosure;
FIG. 2 is a schematic diagram of an architecture of a communication system provided by some embodiments of the present disclosure;
FIG. 3 is a schematic flowchart of a reference signal configuration information sending method provided by some embodiments of the present disclosure;
FIG. 4 is a schematic flowchart of another reference signal configuration information sending method provided by some embodiments of the present disclosure;
FIG. 5 is a schematic flowchart of a reference signal configuration information receiving method provided by some embodiments of the present disclosure;
FIG. 6 is a schematic flowchart of another reference signal configuration information receiving method provided by some embodiments of the present disclosure;
FIG. 7 is a schematic flowchart of yet another reference signal configuration information receiving method provided by some embodiments of the present disclosure;
FIG. 8 is a structural schematic diagram of a communication apparatus provided by some embodiments of the present disclosure;
FIG. 9 is a structural schematic diagram of another communication apparatus provided by some embodiments of the present disclosure; and
FIG. 10 is a composition schematic diagram of a composition of a communication apparatus provided by some embodiments of the present disclosure.

### DETAILED DESCRIPTION

The technical solutions in the present disclosure will be described clearly and completely below in conjunction with the drawings in the present disclosure. Obviously, the described embodiments are only some embodiments of the present disclosure, rather than all the embodiments of the present disclosure. Based on the embodiments in the present disclosure, all other embodiments obtained by a person of ordinary skill in the art without creative work shall fall within the scope of protection of the present disclosure.

It should be noted that, in the present disclosure, wordings such as "exemplary" or "for example" are used to mean serving as an example, illustration, or explanation. Any embodiment or design solution described as "exemplary" or "for example" in the present disclosure should not be interpreted as being preferred or having advantages over other embodiments or design solutions. Specifically, the usge of wording such as "exemplary" or "for example" is intended to present related concepts in a concrete manner.

In the following, the terms "first" and "second" are used for descriptive purposes only and should not be understood as indicating or implying relative importance or implicitly specifying the quantity of the indicated technical features. Thus, features defined with "first" and "second" may explicitly or implicitly include one or more of such features.

In the description of the present disclosure, unless otherwise specified, "/" indicates the meaning of "or", for example, A/B may indicate A or B. "And/or" in this document merely describes an association relationship of associated objects, indicating that three relationships may exist, for example, A and/or B may indicate: the case of A existing alone, the case of A and B existing simultaneously, and the case of B existing alone. Furthermore, "at least one" refers to one or more, and "multiple/plurality of" refers to two or more.

As described in the background, with the increase in the number of antennas, the overhead requirement for reference signals is becoming increasingly large. For example, for the case of a density of 1 (namely, an average of one reference signal port corresponding to one resource element), where each physical resource block (PRB) includes a case of 12 subcarriers * S symbols, 64 antennas need 6 symbols, while 128 antennas require 11 symbols to transmit the reference signals (for example, channel state information-reference signals (CSI-RS)), that is, there is a problem of excessively high reference signal overhead.

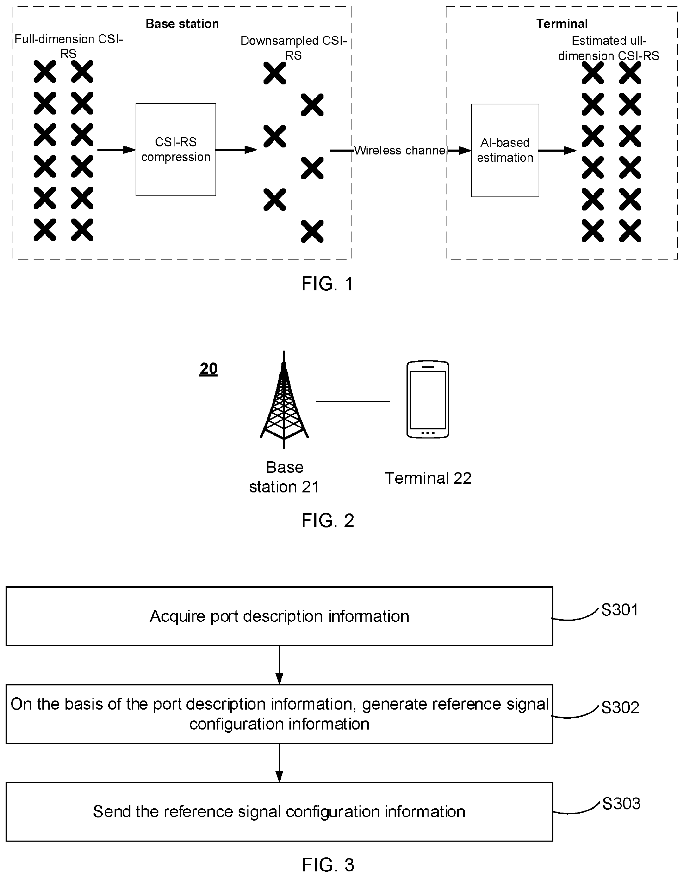

To address the problem of excessively high reference signal overhead, one method is to down-sample a full-dimension reference signal, for example, including N ports, to M ports, actually transmit the reference signal of M ports, and at the receiving side, channel information of the M ports is obtained by receiving the reference signal of the M ports, and advanced information processing technology is utilized to process the channel information of the M ports into channel information of N ports, thereby equivalently achieving the purpose of transmitting the reference signal of N ports, where generally M is less than N, and both M and N are positive integers, for example, N is 4 times, 8 times, 12 times, etc. of M. An example is as described in FIG. 1, where the base station side performs downsampling (also referred to as downsampling) on a full-dimension CSI-RS (illustrated with a larger number of ports in the figure), obtains a down-sampled CSI-RS (illustrated with a smaller number of ports in the figure), and then transmits the down-sampled CSI-RS. After receiving the down-sampled CSI-RS, the terminal side measures and obtains channel information of the down-sampled M ports, and processes the channel information of the M ports based on artificial intelligence, restoring the channel information of the M ports corresponding to the down-sampled CSI-RS to the channel information of the N ports corresponding to the full-dimension CSI-RS. However, in practical usage, the base station may not know the model corresponding to the information processing of the terminal, including the model's requirements for the input size, and the correspondence relationship between the input channel information and the channel information of the N ports, for example, which few ports among the N ports the M ports are selected from, and how the N ports and the M ports are arranged, thereby causing a significant difference between the channel information corresponding to the full-dimension CSI-RS obtained by the terminal through processing and the channel information of the CSI-RS of the N ports that the base station actually intends to transmit. This leads to the inability to accurately estimate the channel information of the N ports. For ease of description, the original unsampled port set, or the full-dimension port set, or the port set originally used by a communication node to transmit a reference signal, is referred to as a first port set, the first port set includes N ports, and the port set after downsampling, or the port set actually used to transmit the reference signal, is referred to as a second port set, where the number of ports in the second port set is M. Generally, the second port set is a subset of the first port set. Herein, M and N are positive integers, and M is less than N. It should be noted that, the CSI-RS in this embodiment may also be replaced with other types of reference signals.

Based on this, in this method, a first node may acquire port description information, and generate reference signal configuration information according to the port description information. Then, the reference signal configuration information is sent. Herein, the port description information is used to describe the capability of a second node for information processing, for example including but not limited to at least one of: the input size of a model or function for information processing in the second node (for example, the numberof one or more second port sets M ), a mapping relationship between port(s) corresponding to the input channel information (for example, one or more second port sets) and port(s) corresponding to the output channel information (for example, the first port set), fthe port index of the second port set, a downsampling factor, second port set description information, and the like. For ease of description, K second port set description information is defined herein, where the K second port set description information includes at least one of: the number of ports of K second port sets, or a mapping relationship from the K second port sets to the first port set, or K downsampling factors, or K models, or K model identifiers, or K functions, or K function identifiers, where K is an integer greater than or equal to 1, and in some examples, the port description information also includes the second port set description information. The first node may generate reference signal configuration information according to the port description information and transmit the reference signal configuration information to the second node. In some examples, the reference signal configuration information includes the port description information (of course, the port description information may also be transmitted via a higher layer and/or a physical outside the reference signal configuration information), where the port description information includes a number of ports of a second port set, or a mapping relationship from a second port set to the first port set, or a downsampling factor, and after receiving the reference signal configuration information, the second node may determine the port description information according to the reference signal configuration information, and determine an information processing manner according to the port description information, so that a consistent understanding of the reference signal configuration by the both communication parties is enabled to ensure that one or both communication parties process the reference signal correctly.

In the embodiments of the present disclosure, the network architecture of a mobile communication network (including but not limited to 3G, 4G, 5G, and future mobile communication networks) may include a network-side device (for example, including but not limited to a base station) and a receiving-side device (for example, including but not limited to a terminal). And it should be understood that, in this example, in downlink, a first communication node (which may also be referred to as a first communication node device) may be a base station-side device, and a second communication node (which may also be referred to as a second communication node device) may be a terminal-side device, and of course, in uplink, the first communication node may also be a terminal-side device, and the second communication node may also be a base station-side device. In a case where the two communication nodes are in device-to-device communication, both the first communication node and the second communication node may be base stations or terminals. The first communication node and the second communication node may be referred to as a first node and a second node for short, respectively.

Exemplarily, taking the network-side device as a base station and the receiving-side device as a terminal as an example, FIG. 2 shows a schematic diagram of an architecture of a communication system provided by the embodiments of the present disclosure. As shown in FIG. 2, a communication system 20 includes a base station 21 and a terminal 22. Herein, the base station 21 and the terminal 22 may be in communication connection.

In some embodiments, the base station 21 is used to provide wireless access services for multiple terminals 22. Specifically, a base station 21 provides a service coverage area (which may also be called a cell). A terminal 22 entering this area may communicate with the base station 21 via a wireless signal, thereby receiving the wireless access service provided by the base station 21. Service coverage areas of base stations 21 may overlap, and a terminal 22 located within an overlap area may receive wireless signals from multiple base stations 21.

In some embodiments, a base station 21 may connect to multiple terminal 22 devices, for example, the base station 21 is connected to a terminal 22 and a terminal 22. Herein, the terminal 22 and the terminal 22 may be located in the same cell, or the terminal 22 and the terminal 22 may be located in different cells. That is to say, a base station 21 may provide a network service to a terminal 22 in one cell, or may simultaneously provide network services to terminals 22 in multiple cells.

In some embodiments, the base station 21 may be a base station in long term evolution (LTE), long term evolution advanced (LTEA), or an evolutional node B (eNB or eNodeB), a base station in a 5G network, or a base station in a future communication system. The base station may include various network-side devices such as macro base stations, micro base stations, home base stations, radio remote units, reconfigurable intelligent surfaces (RISs), routers, wireless fidelity (WIFI) devices, primary cells (primary cell), and secondary cells (secondary cell).

In some embodiments, the terminal 22 may be a device with a wireless transceiving function, which may be deployed on land, including indoor or outdoor, handheld, wearable, or vehicle-mounted; the terminal 22 may also be deployed on water surfaces (such as on ships); and the terminal 22 may further be deployed in the air (for example, on airplanes, balloons, and satellites). The terminal may be a mobile phone, a Pad, a computer with a wireless transceiving function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, and the like. The embodiments of the present disclosure do not define the application scenario. The terminal may sometimes also be referred to as a user, a User Equipment (UE), an access terminal, a UE unit, a UE station, a mobile station, a mobile platform, a remote station, a remote terminal, a mobile device, a UE terminal, a wireless communication device, a UE agent, or a UE apparatus, which is not limited in the embodiments of the present disclosure.

In some embodiments, a higher layer signaling includes, but is not limited to, radio resource control (RRC), media access control-control element (MAC CE), or other higher layer signalings above the physical layer. Physical layer signaling includes, but is not limited to, downlink control information and uplink control information. As an example, physical layer signaling may be transmitted between the base station and the terminal on a physical downlink control channel (PDCCH), and physical layer signaling may be transmitted on a physical uplink control channel (PUCCH).

In some embodiments, an indicator of a parameter may also be referred to as an index, or an identifier (ID). Indicator, identifier, and index are equivalent concepts. For example, a resource identifier of a wireless system may also be referred to as a resource indicator, or a resource index. The resources of a wireless system include, but are not limited to, one of: a reference signal resource, a reference signal resource group, a reference signal resource configuration, a channel state information (CSI) report, a CSI report set, or identifiers corresponding to a terminal, a base station, a panel, a neural network, a sub-neural network, a neural network layer, etc. The base station may indicate an identifier of one or a group of resources to the terminal through various higher layer signalings or physical layer signalings. The terminal may feed back an identifier of one or a group of resources to the base station through various higher layer signalings and/or physical layer signalings.

In some embodiments, transmission includes sending or receiving. For example, sending data or a signal, or, receiving data or a signal.

In some embodiments, for calculating channel state information or performing channel estimation, mobility management, positioning, etc., a base station or a user needs to send a reference signal (RS). A reference signal includes, but is not limited to, a channel-state information reference signal (CSI-RS) (which includes zero power CSI-RS (ZP CSI-RS) and non-zero power CSI-RS (NZP CSI-RS)), channel-state information-interference measurement (CSI-IM), a sounding reference signal (SRS), a synchronization signals block (SSB), a physical broadcast channel (PBCH), and a synchronization signals block/physical broadcast channel (SSB/PBCH). NZP CSI-RS may be used to measure a channel or interference. CSI-RS may also be used for tracking, which is called CSI-RS for Tracking (TRS). CSI-IM is generally used to measure interference. SRS is used to measure an uplink channel. In addition, a set of resource elements (REs) included in a time-frequency resource for transmitting a reference signal is called a reference signal resource, e.g., a CSI-RS resource, an SRS resource, a CSI-IM resource, and an SSB resource. Herein, SSB includes a synchronization signals block and/or a physical broadcast channel.

In some embodiments, to save signaling overhead, multiple reference signal resources may be grouped into multiple sets (e.g., a CSI-RS resource set, a CSI-IM resource set, an SRS resource set). A reference signal resource set includes at least one reference signal resource. Multiple reference signal resource sets may all come from the same reference signal resource setting (e.g., CSI-RS resource setting, SRS resource setting, where CSI-RS resource setting may be combined with CSI-IM resource setting, both referred to as CSI-RS resource setting) to configure parameter information.

In some embodiments, a time instance represents a time period, for example, a time instance may be a slot. The slot may be a slot or a mini slot. A slot or a mini slot includes at least one symbol. A symbol refers to a time unit in a subframe, a frame, or a slot, for example, a symbol may be an orthogonal frequency division multiplexing (OFDM) symbol, a single-carrier frequency division multiple access (SC-FDMA) symbol, or an orthogonal frequency division multiple access (OFDMA) symbol.

In some embodiments, the minimum transmission unit carrying a modulation symbol is a resource element (RE). An RE is the minimum time-frequency resource used to transmit one modulation symbol, including a wireless resource on a symbol and a frequency domain subcarrier. A wireless resource composed of multiple symbols and multiple subcarriers constitutes a physical resource block. For example, a physical resource block (PRB) is constituted by 1 to 14 consecutively indexed symbols and 12 consecutively indexed subcarriers. Herein, a reference signal pattern includes at least one RE, and the reference signal is transmitted only on a fixed RE preconfigured by a base station, which is called a pattern, e.g., a DMRS pattern.

In some embodiments, a beam includes a sending beam, a receiving beam, a receiving beam and sending beam pair, and a sending beam and receiving beam pair. In some embodiments, a beam may be understood as a resource, e.g., a reference signal resource, a sending end spatial filter, a receiving end spatial filter, a spatial filter, a spatial reception parameter, a sending end precoding, a receiving end precoding, an antenna port, an antenna weight vector, an antenna weight matrix, and the like. A beam index may be replaced with a resource index (e.g., a reference signal resource index) since a beam may be bound with some time-frequency-code resources for transmission. A beam may also be a transmission (sending/receiving) manner; the transmission manner may include space division multiplexing, frequency domain/time domain diversity, beamforming, and the like.

In some embodiments, a communication node may select an information processing manner to process the obtained information (e.g., channel information, channel matrix information, time domain channel information, frequency domain channel information, angle information, location information), so as to obtain an information processing result (referred to as a processing result for short). The processing result includes one or more of the pieces of channel state information, or one or more of pieces of beam parameter information, or angle information, location information (e.g., coordinates), location parameter information.

In some embodiments, an information processing manner may be a traditional information processing manner or various advanced information processing manners, and the advanced information processing manners include but are not limited to an information processing manner based on artificial intelligence (AI).

In some embodiments, artificial intelligence (AI) includes devices, components, software, modules with self-learning capabilities, such as machine learning (ML), deep learning, reinforcement learning, transfer learning, deep reinforcement learning, meta learning, and the like. In some embodiments, artificial intelligence is implemented through an artificial intelligence network (or referred to as a neural network), where a neural network includes multiple layers, each layer includes at least one node, and in an example, a neural network includes an input layer, an output layer, and at least one hidden layer. Herein, each neural network layer includes but is not limited to at least one of a fully connected layer, a dense layer, a convolutional layer, a transposed convolutional layer, a direct connection layer, an activation function, a normalization layer, a pooling layer, and the like. In some embodiments, each layer of a neural network may include a sub-neural network, e.g., a residual block (Residual Network block or Resnet block), a Densenet Block, a Recurrent Neural Network (RNN), and the like. An artificial intelligence network may be implemented through a model, where the model may include a neural network model, where the neural network model includes a neural network model structure and/or neural network model parameters, where the neural network model structure may be referred to as a model structure for short, and the neural network model parameters may be referred to as network parameters or model parameters for short. A model structure defines a network architecture including the number of layers of a neural network, the size of each layer, activation functions, link conditions, convolution kernels sizes, convolution strides, convolution types (e.g., 1D convolution, 2D convolution, 3D convolution, dilated convolution, transposed convolution, separable convolution, grouped convolution, extended convolution, etc.) and network parameters are weights and/or offsets of each layer network in the neural network model and values thereof. A model structure may correspond to multiple sets of different neural network model parameter values to adapt to different scenarios.

In some examples, model parameters of a neural network are obtained through online training or offline training. For example, by inputting at least one sample, the neural network model parameters are trained. Herein, a sample includes a feature and a label.

In some examples, a sample includes N features (Feature) and M labels (Label), where N is a positive integer, and M is an integer greater than or equal to 0. Multiple samples constitute a dataset. In a specific example, a sample includes one feature and one label, for example, a sample in supervised learning. In an example, a sample has only one feature and no label, for example, a sample in unsupervised learning. In some examples, a sample has multiple features and one label, for example, in a supervised learning network model with multiple inputs and single output. In some examples, a sample includes one feature and multiple labels, for example, in a supervised learning network model with single input and multiple outputs. In some examples, a feature may be an array, and in some examples, a label is also an array. Herein, an array may be a vector, a matrix, or a tensor with more than two dimensions. Herein, each element in the array may be a discrete value, or a real value, or a real value from 0 to 1, or a real value from -0.5 to 0.5.

In some examples, it is necessary to perform normalization processing on elements in an array corresponding to a label or a feature, so that the network model converges faster. So called normalization refers to normalizing the value of an element in an array to a value in an interval greater than or equal to a and less than or equal to b. There are multiple types of normalization for samples, for example, in an example, a=-0.5, b=0.5. In an example, a=0, b=1. In an example, elements in the array are divided by the number with the largest absolute value in the array elements to achieve normalization. In an example, elements in the array are divided by the variance of the elements in the array to achieve normalization. In an example, elements in the array are divided by a fixed value (for example, the maximum value of all elements in all samples) to achieve normalization. In an example, elements in the array are divided by a statistical value (e.g., the statistical variance of all elements in all samples) to achieve normalization. For index values, e.g., a beam index, CRI, SSBRI, etc., normalization may be achieved through One-Hot Encoding.

In some embodiments, to better transmit data or signals, a base station or a terminal needs to acquire measurement parameters, where the measurement parameters may include channel state information or other parameters used to characterize a channel, and the channel state information may include at least one of: channel state information-reference signal resource indicator (CSI-RS resource indicator, CRI); synchronization signals block resource indicator (synchronization signals block resource indicator, SSBRI); layer 1 reference signal received power (L1 reference signal received power, L1-RSRP or RSRP), differential RSRP (differential RSRP); layer 1 signal-to-interference noise ratio (L1 signal-to-interference noise ratio, L1-SINR or SINR), differential L1-SINR (Differential L1-SINR); reference signal received quality (reference signal received quality, RSRQ); channel quality indicator (channel quality indicator, CQI); precoding matrix indicator (precoding matrix indicator, PMI); layer indicator (layer indicator, LI); rank indicator (rank indicator, RI); precoding information. Precoding information includes a first type of precoding information, e.g., codebook-based precoding information (a specific example is a codebook for N antennas in LTE, where N = 2, 4, 8, 12, 16, 24, 32, etc., and, type I codebook, type II codebook, type II port selection codebook, enhanced type II codebook, enhanced type II selection codebook, further enhanced type II selection codebook in NR), where the precoding matrix indicator is one type of the codebook-based precoding information. Precoding information further includes a manner based on non-codebook implementation, e.g., a second type of precoding information (e.g., channel state information obtained based on advanced information processing technologies such as AI).

In some examples, channel information is information obtained according to a reference signal (e.g., CSI-RS) and used to describe a channel environment between communication nodes, such as, a time domain channel matrix, a frequency domain channel matrix. In some examples, channel information is a complex matrix, and the size of the channel matrix is related to the number of sending antennas Nt, the number of receiving antennas Nr, and resource elements. For example, on a physical resource block (PRB), there is at least one Nr*Nt channel matrix.

In some embodiments, the antenna is a physical antennas. In some examples, the antenna is a logical antenna. In some examples, the port and the antenna may be interchangeable concepts. In some examples, the antenna is a sending antenna. In some examples, the antenna is a receiving antenna. In some examples, the antenna includes an antenna pair including a sendign antenna and a receiving antenna. In some examples, the antenna may be a uniform linear array. In some examples, the antenna is a uniform planar array, e.g., including array elements/antennas in Ng rows and Mg columns, where Ng and Mg are positive integers. In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna; in some examples, the antenna is an omnidirectional antenna. In some examples, the antenna is a dual-polarized antenna. In some examples, the antenna is a single-polarized antenna.

FIG. 3 is a flow schematic diagram of a reference signal configuration information sending method provided by the embodiments of the present disclosure. Exemplarily, the reference signal configuration information sending method provided by the present disclosure may be applied to the network architecture shown in FIG. 2, and specifically may be applied to the base station in FIG. 2. In the embodiments of the present disclosure, the reference signal is described by taking CSI-RS as an example, and the CSI-RS may also be replaced with other types of reference signals.

As shown in FIG. 3, the reference signal configuration information sending method provided by the present disclosure may specifically at least S301and S302.

In S301: port description information is acquired.

In some embodiments, when a reference signal is needed to be sent, a first node may acquire port description information of a second node, where the port description information is used to reflect information processing capability of the second node and includes at least one of: a port set pattern, a port index list of a first port set, a port index list of at least one second port set, a number of ports of the first port set, a number of ports of the at least one second port set (for example, an input size of a model or a function used for information processing in the second node), at least one downsampling factor, description information of at least one second port set, and the like.

For ease of description, the at least one second port set is defined as K second port set description information herein, where the K second port set description information may include at least one of: a number of ports of K second port sets, or a mapping relationship from the K second port sets to the first port set, or K downsampling factors, or K models, or K model identifiers, or K functions, or K function identifiers, where K is an integer greater than or equal to 1. Specific content of the port description information refer to the following description, and detailed description is not provided herein.

In an implementation, the first node may acquire the port description information from the second node, that is, the foregoing S301 may be specifically implemented as: acquiring the port description information by receiving a higher layer signaling and/or a physical layer signaling.

In an implementation, acquiring the port description information in the foregoing S301 may be specifically implemented as that: the first node may acquire the port description information by receiving at least one of: a model identifier; model description information; a function identifier; or function description information.

Herein, a model identifier corresponds to a model and model description information of the model. A function identifier corresponds to a function and function description information of the function.

In some embodiments, the port description information is included in the foregoing model description information and function description information.

It should be noted that the model mentioned herein refers to a data flow from an original input of a sample to an output target that passes through multiple linear or nonlinear components. The model includes a neural network model, a non-artificial intelligence module for processing information or corresponding model thereof, a functional component or function that maps input information to output information (where the mapping includes linear mapping and nonlinear mapping). In some implementations, each model corresponds to a model indicator (Model ID) or a model identifier (Model ID). In some implementations, the model identifier may also have other equivalent names or concepts such as: a model index, a first identifier, a function indicator (ID), a model indication, and the like.

In some examples, the model includes a model structure and model parameters. For example, the model is a neural network model, the neural network model includes a neural network model structure and neural network model parameters, which are used to describe a structure of the neural network and parameter values of the neural network, respectively. One neural network model structure may correspond to multiple neural network model parameters, that is, the neural network model structures may be the same, but the corresponding neural network model parameter values may be different.

It should be noted that one node may send a functionality or a function index to another node to indicate that a terminal in the communication system may use the function to process information. The function mentioned herein may also be called a functional module, a functional function, a functional mapping, etc., and is used to describe characteristics or types of an information processing manner. The types of the information processing manner include multiple types, such as those for positioning, beam management, CSI prediction, beam prediction, channel estimation, etc., and the characteristics of the information processing manner include, but are not limited to, scenario description to which the function is adapted, input parameter description, output parameter description, and which type of measurement parameter the output result belongs to. Herein, a function corresponds to one or more information processing manners, and each information processing manner may be implemented by one or more models. Or, a function may be implemented by one or more models.

In S302: reference signal configuration information is generated according to the port description information.

In some embodiments, after the port description information is acquired, the first node may generate the reference signal configuration information according to the port description information, where the reference signal configuration information is used to configure a reference signal. Both communication parties send and receive the reference signal according to the reference signal configuration information, which can achieve a consistent understanding of the reference signal between both communication parties.

For the case where the first node acquires the port description information from the second node: one implementation is that the first node acquires a set of port description information sent from the second node and determines the reference signal configuration information according to the port description information; another implementation is that the first node acquires multiple sets (greater than one set) of port description information sent from the second node and selects one set of port description information from the multiple sets of port description information according to its own channel condition or scheduling manner, etc., and generates the reference signal configuration information using the selected port description information; and yet another implementation is that the first node sends multiple sets of port description information to the second node, the second node may select one set of port description information from the multiple sets of port description information according to its own channel condition or its locally stored model condition, etc., and feedback the selected port description information or an index corresponding to the selected port description information to the first node; correspondingly, the first node acquires the port description information from the index corresponding to the port description information feedback by the second node.

It should be noted that the K sets of port description information herein correspond to K models, or correspond to K functions, or correspond to K information processing manners. Herein, a model (or a function, or a information processing manner) corresponds to a type of second port set description information (or a type of number of second port sets, or a type of port index of a second port set, or a type of mapping relationship from a second port set to the first port set). For example, in the i-th set of port description information, only description information of the i-th second port set is included; for example, in an example, such information is a number of ports Mᵢ of the i-th second port set and/or an i-th downsampling factor Oᵢ; in one example, such information is a number of ports (M₁ᵢ, M₂ᵢ) of the i-th second port set and/or an i-th downsampling factor (O₁ᵢ, O₂ᵢ); in one example, it is a number of ports (M₁ᵢ, M₂ᵢ, M₃ᵢ) of the i-th second port set and/or an i-th downsampling factor (O₁ᵢ, O₂ᵢ, O₃ᵢ), i=1, ..., K. In some descriptions, the K second port sets may be merged into one piece of port description information. At this time, the K sets of port description information actually refer to description information of K second port sets in one piece of port description information, such as, a number of ports of K second port sets, a port index table of K second port sets, a mapping relationship from K second port sets to the first port set, and the like. For example, in an example, one piece of port description information includes at least a number of ports Mᵢ of the i-th second port set and/or an i-th downsampling factor Oᵢ, i=1, ..., K. In an example, one piece of port description information includes at least a number of ports (M₁ᵢ, M₂ᵢ) of the i-th second port set and/or an i-th downsampling factor (O₁ᵢ, O₂ᵢ), i=1, ..., K. In an example, one piece of port description information includes at least a number of ports (M₁ᵢ, M₂ᵢ, M₃ᵢ) of the i-th second port set and/or an i-th downsampling factor (O₁ᵢ, O₂ᵢ, O₃ᵢ), i=1, ..., K, etc., and may also include offset information on a corresponding dimension. Herein, K is a positive integer.

In some embodiments of the present disclosure, for ease of description or simplicity, the number of ports Mᵢ of the i-th second port set may be simply written as Mᵢ; the i-th downsampling factor Oᵢ may be simply written as Oᵢ; the number of ports M_{Ki} of the i-th second port set on dimension k may be simply written as M_{Ki}, where k=1, 2, 3, etc.; writing the number of ports of the i-th second port set for two dimensions as (M₁ᵢ, M₂ᵢ) may be equivalent to writing M₁ᵢ and M₂ᵢ separately; writing the number of ports of the i-th second port set for three dimensions as (M₁ᵢ, M₂ᵢ, M₃ᵢ) may be equivalent to writing M₁ᵢ, M₂ᵢ, and M₃ᵢ separately; the i-th downsampling factor Oₖᵢ on dimension k may be simply written as Oₖᵢ, where k=1, 2, 3, etc.; writing the i-th downsampling factor for two dimensions as (O₁ᵢ, O₂ᵢ) may be equivalent to writing O₁ᵢ and O₂ᵢ separately; writing the i-th downsampling factor for three dimensions as (O₁ᵢ, O₂ᵢ, O₃ᵢ) may be equivalent to writing O₁ᵢ, O₂ᵢ, and O₃ᵢ separately. Similarly, the number of ports N of the first port set may be simply written as N, the number of ports Nₖ of the first port set on the k-th dimension may be simply written as Nₖ, where k=1, 2, 3; and (N₁, N₂) may represent the number of ports N₁ of the first port set on dimension 1 and the number of ports N₂ of the first port set on dimension 2. And (N₁, N₂, N₃) may represent the number of ports N₁ of the first port set on dimension 1, the number of ports N₂ of the first port set on dimension 2, and the number of ports N₃ of the first port set on dimension 3.

S303: reference signal configuration information is sent.

In some embodiments, after the reference signal configuration information is generated, the first node may send the reference signal configuration information to a second node. Thus, the first node and the second node may maintain a consistent understanding of the reference signal configuration, thereby ensuring that one or both parties in the communication correctly process the reference signal.

In some embodiments, the reference signal configuration information at least includes port description information.

It should be understood that the port description information included in the reference signal configuration information herein is not completely identical to the port description information in the aforementioned S301. For example, the port description information in the aforementioned S301 may include description information of K second port sets, while the port description information included in the reference signal configuration information herein may include K₀ second port set description information, where K₀ is less than or equal to K. In some examples, the port description information obtained by the first node may be referred to as first port description information, while the port description information included in the reference signal configuration information or the port description information sent from the first node to the second node may be referred to as second port description information. Both the first port description information and the second port description information are port description information, and they may differ only in the number of pieces of second port description information included therein.

In some examples, the reference signal configuration information includes port description information, and the port description information herein includes a number of ports of a second port set, or a mapping relationship from a second port set to the first port set, or a downsampling factor, and the like. The first node sends the reference signal configuration signal; correspondingly, after receiving the reference signal configuration information, the second node may determine the port description information based on the reference signal configuration information, and determine an information processing manner based on the port description information, thereby achieving a consistent understanding of the reference signal configuration between both communication parties.

In some embodiments, the reference signal configuration information further at least includes at least one of: a reference signal type; a reference signal precoding enable identifier (i.e., whether the reference signal is precoded); an indication of a time-domain index set and/or a frequency-domain index set for carrying a reference signal resource; a model identifier; model description information; a function identifier; or function description information.

Herein, the reference signal type includes but is not limited to at least one of: a reference signal for model monitoring, a reference signal for model inference, or a reference signal for data collection. For example, the reference signal precoding enable identifier includes two values; a first value indicates that the reference signal is precoded during transmission. A second value indicates that the reference signal is not precoded during transmission.

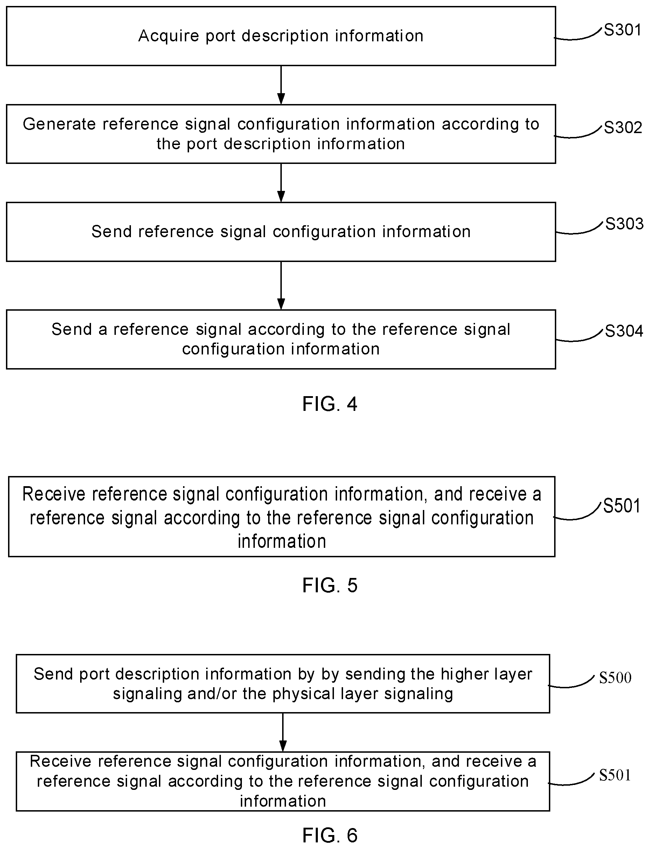

FIG. 4 is a flow schematic diagram of another reference signal configuration information sending method provided by the embodiments of the present disclosure; as shown in FIG. 4, the first node further performs the following S304:
S304: a reference signal is sent according to the reference signal configuration information.

In some embodiments, the first node originally needs to send a full-dimension reference signal; in order to reduce the reference signal overhead, the first node may downsample the full-dimension reference signal based on the reference signal configuration information to obtain a downsampled reference signal and transmit the downsampled reference signal. For example, an N-port reference signal is downsampled to obtain an M-port reference signal, and the M-port reference signal is actually sent. Herein, M is less than N. Both M and N are positive integers.

In an implementation, the aforementioned S304 may be specifically implemented as: sending reference signals corresponding to at least two port set patterns on different slots. Herein, a port set pattern reflects a manner of mapping a reference signal from the first port set to a second port set, e.g., a port index list of the second port set; e.g., a bitmap with a length of N bits, where the i-th bit is used to indicate whether a port of the first port set actually sends a reference signal (or whether a port of the first port set belongs to the second port set); if the port of the first port set actually sends a reference signal (or the port of the first port set belongs to the second port set), a first value is taken; otherwise, a second value is taken, and all ports that actually send reference signals constitute the second port set. Herein, the first value and the second value are two different values; for example, the first value is a non-zero value and the second value is 0; the first value is TRUE and the second value is FALSE.

In another implementation, the aforementioned S304 may be specifically implemented as: sending reference signals corresponding to at least two port set patterns on different resource blocks (RB).

That is, the first node sends a reference signal corresponding to the reference signal configuration information according to the reference signal configuration information. In a specific example, the first node sends reference signals with the same port set pattern on different slots; in a specific example, a base station sends reference signals with K different port set patterns on K different slots. In a specific example, the base station sends reference signals with the same port set pattern on different frequency-domain granularities (e.g., different RBs or subbands); in a specific example, the base station sends reference signals with K different port set patterns on K different frequency-domain groups.

It should be understood that sending reference signals corresponding to at least two port set patterns enables the second node to recover the downsampled reference signal based on multiple port set patterns, which can effectively improve the accuracy of the second node in recovering the full-dimension reference signal. Or, there is a port set pattern corresponding to the first port set, which can be used as a label; for example, the port set pattern can be used to train a model or for model monitoring.

It should be understood that S304 may not be performed in some examples; in some examples, S304 and S303 are performed in the same slot or at the same time; in some examples, S304 and S303 are performed in different slots or at different times. In some examples, S304 may be performed first, followed by S303.

A detailed introduction to the port description information in the aforementioned S301 is provided below.

In some embodiments, the port description information includes at least one of: a port set pattern, a port index list of a first port set, a port index list of at least one second port set, a number of ports of the first port set, a number of ports of at least one second port set, at least one downsampling factor, description information of at least one second port set.

In some embodiments, the number of ports of the first port set is greater than the number of ports of the second port set.

In some embodiments, the port index list of the second port set is a subset of the port index list of the first port set.

It should be noted that the port description information may also be referred to as port indication information, which is mainly used to describe at least one of:
a number of ports of the first port set and/or a number of ports of the second port set;
port indexes of the first port set and/or port indexes of one or more second port sets;
a mapping relationship from one or more second port sets to the first port set;
one or more downsampling values;
where the second port set is a subset of the first port set; or in other words, the number of ports of the first port set is greater than the number of ports of the second port set.

In some embodiments, the aforementioned port description information further includes: a number of receive ports; a receive port identifier; a reference signal precoding enable identifier (i.e., whether the reference signal is precoded during transmission).

That is, a base station (the aforementioned first node) may acquire the port description information based on antenna configuration or locally acquired models. In some examples, the base station acquires the port description information based on port description information sent from a receiving terminal (the aforementioned second node). In some examples, the port description information is part of model description information. In some examples, the port description information is a model identifier, where a model identifier corresponds to a model or a piece of model description information. In some examples, the port description information is a part of function description information. In some instances, the port description information is a function identifier, where a function identifier corresponds to a function or function port description information. In some examples, the port description information further includes a number of receive antennas of a terminal. In some examples, the port description information further includes a receive port identifier of a terminal. In some examples, the port description information further includes a reference signal precoding enable identifier.

The first port set described above may be a port set not subjected to reference signal sampling, and the second port set may be a downsampled reference signal port set. Alternatively, the first port set is a port set actually used by a base station for data transmission, and the second port set is a reference signal port set that is actually transmitted. For example, in an example, the second port set includes M ports, and the base station actually transmits a CSI-RS resource including the M ports, and these M ports may also be referred to as partial ports. And upon transmitting data, the base station actually uses N ports (the first port set), that is to say, there may be N antennas, meaning all ports or antennas are used for data transmission. Generally, both M and N are integers, and M is less than N. Herein, N is O times M, that is, N=M*O, and O=2, 3, 4, 8, etc., indicating downsampling.

That is, in some examples, the port description information is a port set pattern, such as a CSI-RS port pattern. In an example, the port set pattern may be a 1*N array or bit mapping, where N is a number of all ports (the first port set). In another example, the port pattern may be an N₁*N₂ dimensional array or bitmap, where. N₁ and N₂ indicate that the ports of the first port set are two-dimensional, for example, having N₁ rows and N₂ columns, where N=N₁*N₂. In yet another example, in a dual-polarized antenna, if N₁ or N₂ does not include polarized antennas, then N=2* N₁* N₂. Each bit in the bit mapping indicates whether the corresponding port has a corresponding CSI-RS port being transmitted. Or whether such port belongs to the second port set. For example, taking a first value indicates that such port belongs to the second port set, and taking a second value indicates that such port does not belong to the second port set and there is no actual CSI-RS transmission. The first value may be a number greater than 0 or TRUE. The second value may be 0 or a negative number, or FALSE.

In some examples, a first node may acquire port description information sent from a second node, where the port description information includes description information of K second port sets, for example, after receiving the port description information, the first node selects description information of one second port set from the K second port set description information, and sends the selected second port set description information to the second node as a part of port description information of reference information configuration information, or sends the port description information including the selected second port set description information via a separate higher layer signaling and/or physical layer signaling.

In some examples, a first node may send port description information to a second node, where the port description information includes description information of K second port sets, for example, after receiving the port description information, the second node selects description information of one second port set from the K second port set description information, and sends the selected second port set description information or indication information of the port description information to the first node as a part of the port description information, after receiving the port description information including the second port set description information or the indication information of the port description information, the first node determines reference signal configuration information and sends the reference signal configuration information to the second node, and the reference signal configuration information may include port description information including the second port set description information determined by the first node.

In some embodiments, the port description information includes one of: a number of ports of the first port set, including a number of ports in each of Z dimensions; K numbers of ports of second port sets, including a number of ports in each of Z dimensions; K downsampling factors, including a downsampling factor corresponding to each dimension among the Z dimensions; Z is a dimension of ports, and Z is a positive integer.

In some embodiments, for scenarios employing a linear antenna array (the above Z is 1), the port description information includes one of: a number of ports N of the first port set and K numbers of ports M of second port sets; a number of ports N of the first port set and K downsampling factors O; K numbers of ports M of second port sets and K downsampling factors O; K numbers of ports M of second port sets; or K downsampling factors O. Herein N, M, O, K are positive integers.

In some embodiments, for scenarios employing a planar antenna array (the above Z is 2), the port description information includes one of: a number of ports (N₁, N₂) of the first port set and K numbers of ports (M₁, M₂) of second port sets; a number of ports (N₁, N₂) of the first port set and K downsampling factors (O₁, O₂); K numbers of ports (M₁, M₂) of second port sets and K downsampling factors (O₁, O₂); K numbers of ports (M₁, M₂) of second port sets; or K downsampling factors (O₁, O₂); where N₁, N₂, M₁, M₂, O₁, O₂, K are positive integers.

In some embodiments, for scenarios employing a 3D antenna array (the above Z is 3), the port description information includes one of: a number of ports (N₁, N₂, N₃) of the first port set and K numbers of ports (M₁, M₂, M₃) of second port sets; a number of ports (N₁, N₂, N₃) of the first port set and K downsampling factors (O₁, O₂, O₃); K numbers of ports (M₁, M₂, M₃) of second port sets and K downsampling factors (O₁, O₂, O₃); K numbers of ports (M₁, M₂, M₃) of second port sets; K downsampling factors (O₁, O₂, O₃); where N₁, N₂, N₃, M₁, M₂, M₃, O₁, O₂, O₃, K are positive integers. Herein, Nᵢ, Mᵢ, Oᵢ respectively correspond to a number of ports of the first port set in the i-th dimension, a number of ports of the second port set in the i-th dimension, and a downsampling number in the i-th dimension.

In some embodiments, the port description information includes description information of at least one second port set, including at least one of: K numbers of ports of second port sets, a mapping relationship from K second port sets to the first port set, K downsampling factors, K models, K model identifiers, K functions, or K function identifiers, where K is an integer greater than or equal to 1.

That is, the port description information may include K port groups, each port group corresponding to a model or a function; the downsampling factors include K values, each value corresponding to a model or a function; where K is a positive integer, and each port group includes one or more port indices. That is, a model corresponds to a model identifier, a function corresponds to a function identifier, a function or model corresponds to a number of ports of a second port set, or a function or model corresponds to a mapping relationship from a second port set to the first port set, or a function or model corresponds to a downsampling factor.

In some examples, the port description information is a higher layer signaling, and the higher layer signaling includes two values, i.e., a number of ports N of the first port set and a number of ports M of the second port set. In some examples, the port description information is two higher layer signalings, a first higher layer signaling is used to indicate a value of a number of ports N of the first port set, and a second higher layer signaling is used to indicate a value of a number of ports M of the second port set. Herein, N represents a number of ports of the first port set, M represents a number of ports of the second port set, M and N are positive integers, and M<N. In an example, a first higher layer signaling may not be included in a port indication signaling.

In some examples, the port description information is a higher layer signaling, and the higher layer signaling includes four values, i.e., a number of ports (N₁, N₂) of the first port set, and a number of ports (M₁, M₂) of the second port set. In some examples, the port description information is two higher layer signalings, a first higher layer signaling is used to indicate a number of ports (N₁, N₂) of the first port set, and a second higher layer signaling is used to indicate a number of ports (M₁, M₂) of the second port set. Herein, M₁, M₂ represent a number of port rows and a number of port columns of the second port set, N₁, N₂, represent a number of port rows and a number of port columns of the first port set, M and N are positive integers, and M₁<N₁, M₂<N₂. In an example, a first higher layer signaling may not be included in a port indication signaling.

In some examples, the port description information is a higher layer signaling, and the higher layer signaling includes multiple values, i.e., a number of ports N of the first port set and numbers (M₁, ..., M_{K}) of ports of the second port set. In some instances, the port description information is two higher layer signalings, a first higher layer signaling is used to indicate a value of a number of ports N of the first port set, and a second higher layer signaling is used to indicate numbers (M₁, ..., M_{K}) of ports of the second port set (corresponding to K second port description information). Herein, M₁, ..., M_{K} respectively represent numbers of ports of the second port sets of model 1 to model K, and N represents a number of ports of a first port set. N, M₁, ..., M_{K} are all positive integers, and M₁, ..., M_{K} are mutually different and are all less than N. In an example, a first higher layer signaling may not be included in a port indication signaling.

In some example, the port description information is a higher layer signaling, where the higher layer signaling includes a plurality of values, i.e., numbers of ports (N₁, N₂) of a first port set and numbers of ports (M₁ᵢ, ..., M₂ᵢ) of second port sets, i=1, ..., K. In some example, the port description information includes two higher layer signalings, where the higher layer signalings include a plurality of values, a first higher layer signaling is used to indicate numbers of ports (N₁, N₂) of a first port set, and a second higher layer signaling is used to indicate numbers (M₁ᵢ, ..., M₂ᵢ) of ports of second port sets, i=1, ..., K (corresponding to K pieces of second port description information). Herein, M₁ᵢ and M₂ᵢ represent a number of port rows and a number of port columns of a second port set of model i, i=1, ..., K, and N₁ and N₂ represent a number of port rows and a number of port columns of a first port set. N₁, N₂, and M₁ᵢ, ..., M₂ᵢ, i=1, ..., K are all positive integers, and M₁ᵢ, i=1, ..., K are mutually different and are all less than N₁, and M₂ᵢ, i=1, ..., K are mutually different and are all less than N₂. In an example, a first higher layer signaling may not be included in a port indication signaling.

In some example, the port description information is a higher layer signaling, and a higher layer signaling is used to indicate a value of a number of ports N of a first port set and a value of a downsampling factor O. In some example, the port description information includes two higher layer signalings, a first higher layer signaling is used to indicate a value of a number of ports N of a first port set, and a second higher layer signaling is used to indicate a value of a downsampling factor O, then a number of ports M of a second port set may be obtained according to N/O. Herein, N represents a number of ports of a first port set, M represents a number of ports of a second port set, O is a downsampling factor, M and N are positive integers, and M is less than N. In some example, a first higher layer signaling may not be included in a port indication signaling.

In some example, the port description information is a higher layer signaling, and a higher layer signaling is used to indicate a value of a number of ports N of a first port set and a downsampling factor Oᵢ, i=1, ..., K (corresponding to K pieces of second port description information). In some example, port description information includes two higher layer signalings, a first higher layer signaling is used to indicate a value of a number of ports N of a first port set, and a second higher layer signaling is used to indicate a downsampling factor Oᵢ of an i-th model, i=1, ..., K. Herein, Mᵢ, i=1, ..., K represents a number of ports of a second port set of model i (corresponding to K pieces of second port description information), which may be obtained according to N/Oᵢ, and N represents a number of ports of a first port set. N, M₁, ..., M_{K} are all positive integers, and M₁, ..., M_{K} are mutually different and are all less than N. In some example, a first higher layer signaling may not be included in a port indication signaling.

In some example, the port description information is a higher layer signaling, and a higher layer signaling is used to indicate a number of ports (N₁, N₂) of a first port set and downsampling factors (O₁, O₂). In some example, the port description information includes two higher layer signalings, a first higher layer signaling is used to indicate a numbers of ports (N₁, N₂) of a first port set, and a second higher layer signaling is used to indicate downsampling factors (O₁, O₂). Herein, M₁ and M₂ represent a number of port rows and a number of port columns of a second port set, which may be obtained according to N₁/O₁ and N₂/O₂, N₁ and N₂ represent a number of port rows and a number of port columns of a first port set, M and N are positive integers, M₁ is less than N₁, M₂ is less than N₂, and O₁ and O₂ respectively represent corresponding downsampling factors in two dimensions. In some example, a first higher layer signaling may not be included in a port indication signaling.

In some example, the port description information is a higher layer signaling, the higher layer signaling includes a plurality of values, and a higher layer signaling is used to indicate numbers of ports of a first port set (N₁, N₂) and downsampling factors (O₁ᵢ, ..., O₂ᵢ), i=1, ..., K. In some example, the port description information includes two higher layer signalings, the higher layer signalings include a plurality of values, a first higher layer signaling is used to indicate numbers of ports of a first port set (N₁, N₂), and a second higher layer signaling is used to indicate downsampling factors (O₁ᵢ, ..., O₂ᵢ), i=1, ..., K (corresponding to K pieces of second port description information). Herein, M₁ᵢ and M₂ᵢ represent a number of port rows and a number of port columns of a second port set of model i, which may be obtained according to N₁/O₁ᵢ and N₂/O₂ᵢ, i=1, ..., K, and N₁ and N₂ represent a number of port rows and a number of port columns of a first port set. N₁, N₂, and M₁ᵢ, ..., M₂ᵢ, i=1, ..., K are all positive integers, and M₁ᵢ, i=1, ..., K are mutually different and are all less than N₁, and M₂ᵢ, i=1, ..., K are mutually different and are all less than N₂. In some example, a first higher layer signaling may not be included in a port indication signaling.

In some example, the port description information is a higher layer signaling, and a higher layer signaling is used to indicate a value of a number of ports M of a second port set and a value of a downsampling factor O. In some example, the port description information includes two higher layer signalings, a first higher layer signaling is used to indicate a value of a number of ports M of a second port set, and a second higher layer signaling is used to indicate a value of a downsampling factor O, then a number of ports N of a first port set may be obtained according to M*O. Herein, M represents a number of ports of a second port set, N represents a number of ports of a first port set, O is a downsampling factor, M and N are positive integers, and M is less than N. In some example, a first higher layer signaling may not be included in a port indication signaling.

In some example, the port description information is a higher layer signaling, and a higher layer signaling is used to indicate a value of a number of ports M of a second port set and a downsampling factor Oᵢ, i=1, ..., K. In some example, the port description information includes two higher layer signalings, a first higher layer signaling is used to indicate a value of a number of ports M of a second port set, and a second higher layer signaling is used to indicate a downsampling factor Oᵢ of an i-th model, i=1, ..., K. Herein, Mᵢ, i=1, ..., K represents a number of ports of a second port set of model i, and a number N of a first port set may be obtained according to Mᵢ*Oᵢ. N, M₁, ..., M_{K} are all positive integers, and M₁, ..., M_{K} are mutually different and are all less than N. In some example, a first higher layer signaling may not be included in a port indication signaling.

In some example, the port description information is a higher layer signaling, and a higher layer signaling is used to indicate numbers of ports of a second port set (M₁, M₂) and downsampling factors (O₁, O₂). In some example, the port description information includes two higher layer signalings, a first higher layer signaling is used to indicate numbers of ports of a second port set (M₁, M₂), and a second higher layer signaling is used to indicate downsampling factors (O₁, O₂). Herein, M₁ and M₂ represent a number of port rows and a number of port columns of a second port set, N₁ and N₂ represent a number of port rows and a number of port columns of a first port set, which may be obtained according to N₁=M₁*O₁ and N₂=M₂*O₂, M and N are positive integers, and M₁ is less than N₁, M₂ is less than N₂. In some example, a first higher layer signaling may not be included in a port indication signaling.

In some example, the port description information is a higher layer signaling, the higher layer signaling includes a plurality of values, and a higher layer signaling is used to indicate numbers of ports (M₁ᵢ, ..., M₂ᵢ), i=1, ..., K of second port sets, and downsampling factors (O₁ᵢ, ..., O₂ᵢ), i=1, ..., K. In some example, the port description information includes two higher layer signalings, the higher layer signalings include a plurality of values, and a first higher layer signaling is used to indicate numbers (M₁ᵢ, ..., M₂ᵢ), i=1, ..., K of ports of second port sets. A second higher layer signaling is used to indicate downsampling factors (O₁ᵢ, ..., O₂ᵢ), i=1, ..., K. Herein, M₁ᵢ and M₂ᵢ represent a number of port rows and a number of port columns of a second port set of model i, N₁ and N₂ represent a number of port rows and a number of port columns of a first port set, which may be obtained according to N₁=M₁ᵢ*O₁ᵢ and N₂=M₂ᵢ*O₂ᵢ, i=1, ..., K. N₁, N₂, and M₁ᵢ, ..., M₂ᵢ, i=1, ..., K are all positive integers, and M₁ᵢ, ..., M₂ᵢ, i=1, ..., K are mutually different and are all less than N₁, and M₂ᵢ, i=1, ..., K are mutually different and are all less than N₂. In some example, a first higher layer signaling may not be included in a port indication signaling.

In some embodiments, the port description information further includes: port index offset information; where the port index offset information is used to indicate a starting port index of a second port set. In some example, the starting port index is a non-negative integer less than or equal to a downsampling factor.

In some examples, the port description information may further include port index offset information F, where F is a non-negative integer less than or equal to the downsampling factor O or the number of ports M of the second port set, and is used to indicate a starting point of port indices in the second port set.

In some examples, the port description information may further include port index offset information F1 and F2, where F1 and F2 are non-negative integers less than or equal to the downsampling factors O₁ and O₂, respectively, and are used to indicate a starting port index in a first dimension and a starting port index in a second dimension of the second port set, respectively.

In some examples, the port description information may further include port index offset information Fᵢ, where i=1, ..., K, Fᵢ is a non-negative integer less than or equal to an i-th downsampling factor Oᵢ or a number of ports Mᵢ of an i-th second port set, and is used to indicate a starting port index of the i-th second port set for the i-th model.

In some examples, the port description information may further include port index offset information F₁ᵢ and F₂ᵢ, where i=1, ..., K, F₁ᵢ is a non-negative integer less than or equal to an i-th downsampling factor O₁ᵢ corresponding to dimension 1 and a number of ports M₁ᵢ of an i-th second port set corresponding to dimension 1, F₂ᵢ is a non-negative integer less than or equal to an i-th downsampling factor O₂ᵢ corresponding to dimension 2 and a number of ports M₂ᵢ of an i-th second port set corresponding to dimension 2, and F₁ᵢ and F₂ᵢ are used to indicate a starting port index in a first dimension and a starting port index in a second dimension of the i-th second port set for the i-th model, respectively.

In some embodiments, the port set pattern is determined according to an index of at least one second port set, where the second port set may be determined according to at least one of the following rules:
1. The second port set includes at least two ports, and index intervals between the at least two ports are identical;
2. The second port set includes at least one port in each polarization direction, and index intervals of the at least one port in each polarization direction are identical;
3. The second port set includes ports in at least two rows and two columns , and index intervals between ports in each dimension are identical;
4. The second port set includes ports in at least two rows and two columns in each polarization direction;
5. The second port set includes at least two ports in each dimension, and index intervals between the at least two ports in each dimension are identical; or
6. The second port set includes at least one port on each code division multiplexing (CDM) group of the first port set, for example, at least one port on each CDM group of the first port set is selected to form the second port set.

FIG. 5 is a flow schematic diagram of a reference signal configuration information receiving method provided by the embodiments of the present disclosure. For example, the reference signal configuration information receiving method provided by the present disclosure may be applied to the network architecture shown in FIG. 2, and specifically may be applied to the terminal in FIG. 2.

As shown in FIG. 5, the reference signal configuration information receiving method provided by the present disclosure may specifically include at least S501.

In S501: reference signal configuration information is received, and a reference signal is received according to the reference signal configuration information.

In some embodiments, a second node may receive the reference signal configuration information sent from a first node, and receive the reference signal according to the reference signal configuration information. Herein, the reference signal configuration information includes port description information used by both communication parties, so that both communication parties use the same port description information to process the reference signal, meaning that the first node and the second node may maintain a consistent understanding of the reference signal, to ensure that one or both parties of the communication perform correct information processing on the reference signal.

In some embodiments, before the aforementioned S501, the second node further performs the following S500. In S500: port description information is sent. Herein, the second node may send port description information corresponding to K models or functions the second node supports (for example, including K second port description information, which may be referred to here as first port description information) to the first node, to instruct the first node to generate reference signal configuration information according to the port description information.

In some embodiments, the second node sends the port description information through a higher layer signaling and/or a physical layer signaling, accordingly, the first node acquires the port description information by receiving the higher layer signaling and/or the physical layer signaling, where the higher layer signaling and/or the physical layer signaling is different from the reference signal configuration information.

In some embodiments, as shown in FIG. 6, S500 may be specifically implemented as that: the second node send the port description information by sending the higher layer signaling and/or the physical layer signaling.

For example, the higher layer signaling and/or the physical layer signaling may include one set of port description information, or may include multiple sets of port description information. Alternatively, the second node may receive multiple sets of port description information sent from the first node, select one set of port description information according to its own channel condition or locally stored model condition, etc., and send the selected port description information carried in the higher layer signaling and/or the physical layer signaling to the first node (for example herein, the selected port description information may be referred to here as second port description information).

In some embodiments, S500 may further be specifically implemented as that: the second node may send the port description information by sending at least one of: a model identifier; model description information; a function identifier; function description information. Herein, related descriptions of the model and the function refer to the first node side above, which are not repeated herein.

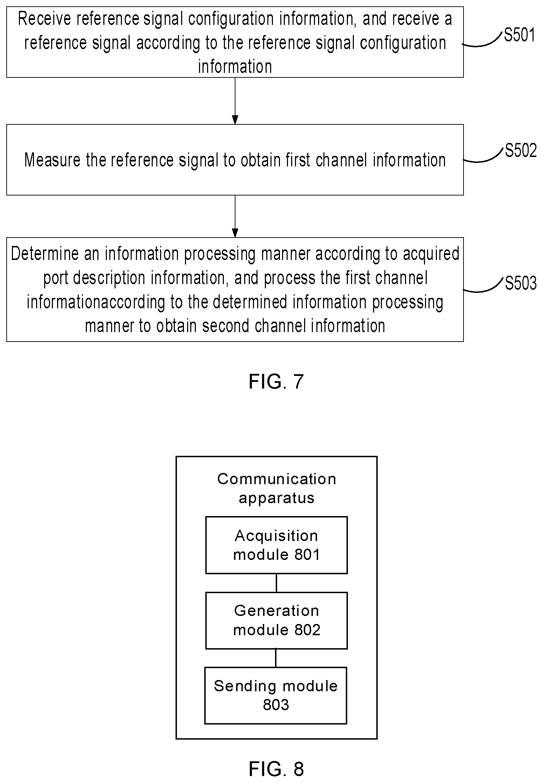

In some embodiments, as shown in FIG. 7, after S501, the second node further performs the following S502-S503.

In S502: the reference signal is measured to obtain first channel information.

In S503: an information processing manner is determined according to acquired port description information, and the first channel information is processed according to the determined information processing manner to obtain second channel information.

Herein, in some examples, the port description information is acquired by receiving the reference signal configuration information, and the reference signal configuration information includes the port description information. In some examples, the port description information is obtained by receiving other higher layers and/or physical layer signalings.

Herein, a number of ports of the first channel information is less than a number of ports of the second channel information.

For the aforementioned S502-S503, after the second node receives the reference signal sent from the first node according to the received reference signal configuration information, the second node may measure the reference signal to obtain the first channel information (corresponding to the aforementioned second port set), and further, determine an information processing manner according to the determined port description information, and process the first channel information to obtain the second channel information (corresponding to the aforementioned first port set).

Herein, the information processing manner mentioned herein may be an advanced signal processing technique. The advanced signal processing technique includes, but is not limited to, an artificial intelligence-based manner, for example, using the first channel information as an input to an artificial intelligence model, and the artificial intelligence model outputs the second channel information after a series of operations. Certainly, a conventional interpolation method or other linear or non-linear mapping method may also be used to obtain the second channel information from the first channel information. The second node acquires channel state information (CSI) according to the second channel information, and feeds back the CSI, where a method for acquiring the CSI according to the second channel information includes, but is not limited to, an artificial intelligence-based method or a traditional codebook-based method, which is not limited herein. In some examples, the first channel information may also be directly used as an input to an (artificial intelligence) model, and the model directly outputs the CSI. Further, the second node feeds back the CSI.

It should be noted that, in embodiments of the present disclosure, feeding back the CSI may also be referred to as transmitting the CSI or sending the CSI, for example, carrying the channel state information on an uplink transmission resource for feedback or transmission. The uplink transmission resource and the corresponding CSI are both indicated by a channel state information report. In embodiments of the present disclosure, feeding back the CSI may also be referred to as transmitting the CSI or sending the CSI, for example, carrying the channel state information on an uplink transmission resource for feedback or transmission. The uplink transmission resource and the corresponding CSI are both indicated by a channel state information report. In an example, transmitting a CSI report refers to transmitting content that is indicated by the CSI report to be transmitted, including but not limited to channel state information, where transmitting includes sending or receiving, and may also be replaced by feedback or receiving. In an example, transmitting the CSI report refers to transmitting content that is indicated by the CSI report to be transmitted through an uplink transmission resource, including but not limited to channel state information, where transmitting includes sending or receiving, and may also be replaced by feedback or receiving.

In an implementation, receiving the reference signal in the aforementioned S501 may be specifically implemented as: receiving reference signals corresponding to at least two port set patterns on different slots. Herein, the port set pattern reflects a manner of mapping the reference signal from the first port set to the second port set.

In another implementation, receiving the reference signal in the aforementioned S501 may be specifically implemented as: receiving reference signals corresponding to at least two port set patterns on different resource blocks.

It should be noted that, regarding related content of the port description information and the reference signal configuration information, reference may be made to the relevant description of the first node (i.e., the base station side), which is not repeated herein.

The present disclosure provides a reference signal configuration information sending method and receiving method, where a first node may acquire port description information and generate reference signal configuration information according to the port description information. Then, the first node send the reference signal configuration information. Herein, the port description information is used to describe a capability of a second node for information processing, including but not limited to at least one of: a port set pattern, a port index list of a first port set, a port index list of at least one second port set, a number of ports of the first port set, a number of ports of at least one second port set, at least one downsampling factor, description information of at least one second port set, and the like. For ease of description, description information of K second port set is defined herein, where the K second port set description information includes at least one of: K numbers of ports of second port sets, or a mapping relationship from the K second port sets to the first port set, or K downsampling factors, or K models, or K model identifiers, or K functions, or K function identifiers, where K is an integer greater than or equal to 1, and in some examples, the port description information further includes description information of the second port set . The first node may generate reference signal configuration information according to the port description information and send the reference signal configuration information to the second node. In some examples, the reference signal configuration information includes the port description information (of course, the port description information may also be transmitted via a higher layer and/or a physical layer separate from the reference signal configuration information); the port description information herein includes a number of ports of a second port set, or a mapping relationship from a second port set to the first port set, or a downsampling factor, and the like; after receiving the reference signal configuration information, the second node may determine the port description information according to the reference signal configuration information and determine an information processing manner according to the port description information, which can ensure a consistent understanding of the reference signal configuration between both communicating parties to ensure that one or both communicating parties correctly process the reference signals.

It can be understood that, in order to realize the aforementioned functions, the communication apparatus (which may be the aforementioned first node and second node) includes a corresponding hardware structure and/or software module for executing each function. Those skilled in the art should easily recognize that the present disclosure can be implemented in the form of hardware or a combination of hardware and computer software, in conjunction with the algorithm steps of various examples described in the embodiments of the present disclosure. Whether a specific function is performed by hardware or by computer software driving hardware depends on the specific application and design constraints of the technical solution. Professional technical personnel may use different methods for each specific application to implement the described functions, but such implementation should not be considered beyond the scope of the present disclosure.

The embodiments of the present disclosure may divide the communication apparatus into functional modules according to the aforementioned method embodiments; for example, each function may correspond to one functional module, or two or more functions may be integrated into one functional module. The aforementioned integrated modules may be implemented in the form of hardware or software. It should be noted that the division of modules in the embodiments of the present disclosure is illustrative and is merely a logical function division; there may be other division manners in actual implementation. The following description takes dividing each functional module corresponding to each function as an example.

FIG. 8 is a structural schematic diagram of a communication apparatus provided by the embodiments of the present disclosure, and the communication apparatus may execute the reference signal configuration information sending methods provided by the aforementioned method embodiments. As shown in FIG. 8, the communication apparatus includes an acquisition module 801, a generation module 802, and a sending module 803.

The acquisition module 801 is configured to acquire port description information; the generation module 802 is configured to generate reference signal configuration information according to the port description information; and the sending module 803 is configured to send the reference signal configuration information.

In some embodiments, the acquisition module 801 is specifically configured to acquire the port description information by receiving a higher layer signaling and/or a physical layer signaling.

In some embodiments, the acquisition module 801 is specifically configured to acquire the port description information by receiving at least one of: a model identifier; model description information; a function identifier; or function description information.

In some embodiments, the port description information includes at least one of: a port set pattern, a port index list of a first port set, a port index list of at least one second port set, a number of ports of a first port set, a number of ports of at least one second port set, at least one downsampling factor, description information of at least one second port set.

In some embodiments, the number of ports of the first port set is greater than a number of ports of a second port set.

In a specific example, the port description information includes: a number of ports N of the first port set and K numbers of ports M of second port sets; a number of ports N of the first port set and K downsampling factors O; K numbers of ports M of second port sets and K downsampling factors O; K numbers of ports M of second port sets; K downsampling factors O; where N, M, O, and K are positive integers.

In some embodiments, the port description information includes one of: a number of ports (N₁, N₂) of the first port set and K numbers of ports (M₁, M₂) of second port sets; a number of ports (N₁, N₂) of the first port set and K downsampling factors (O₁, O₂); K numbers of ports (M₁, M₂) of second port sets and K downsampling factors (O₁, O₂); K numbers of ports (M₁, M₂) of second port sets; K downsampling factors (O₁, O₂); where N₁, N₂, M₁, M₂, O₁, O₂, and K are positive integers.

In some embodiments, the port description information includes one of: a number of ports (N₁, N₂, N₃) of the first port set and a number of ports (M₁, M₂, M₃) of K second port sets; a number of ports (N₁, N₂, N₃) of the first port set and K downsampling factors (O₁, O₂, O₃); K numbers of ports (M₁, M₂, M₃) of second port sets and K downsampling factors (O₁, O₂, O₃); K numbers of ports (M₁, M₂, M₃) of second port sets; K downsampling factors (O₁, O₂, O₃); where N₁, N₂, N₃, M₁, M₂, M₃, O₁, O₂, O₃, and K are positive integers.

In some embodiments, the port description information includes description information of at least one second port set, including at least one of: K numbers of ports of second port sets, a mapping relationship from K second port sets to the first port set, K downsampling factors, K models, K model identifiers, K functions, or K function identifiers, where K is an integer greater than or equal to 1.

In some embodiments, the port description information further includes: port index offset information; where the port index offset information is used to indicate a starting port index in the second port set.

In some embodiments, the port description information further includes: a number of receive ports; a receive port identifier; a reference signal precoding enable identifier.

In some embodiments, the port set pattern is determined according to an index of at least one second port set, where the second port set is determined according to at least one of the following rules: the second port set includes at least two ports, and index intervals of the at least two ports are identical; the second port set includes at least one port in each polarization direction, and index intervals of the at least one port in each polarization direction are identical; the second port set includes ports of at least two rows and two columns, and index intervals of the ports in each dimension are identical; the second port set includes ports of at least two rows and two columns in each polarization direction; the second port set includes at least two ports in each dimension, and index intervals of the at least two ports in each dimension are identical; or the second port set includes at least one port on each CDM group of the first port set.

In some embodiments, a port index list of the second port set is a subset of a port index list of a first port set.

In some embodiments, the reference signal configuration information at least includes port description information.

In some embodiments, the reference signal configuration information includes at least one of: a reference signal type; a reference signal precoding enable identifier; an indication of a time-domain index set and/or a frequency-domain index set for carrying a reference signal resource; a model identifier; model description information; a function identifier; function description information.

In some embodiments, the sending module 803 is further configured to send a reference signal according to the reference signal configuration information.

In some embodiments, the sending module 803 is specifically configured to send reference signals corresponding to at least two port set patterns on different slots; or send reference signals corresponding to at least two port set patterns on different resource blocks.

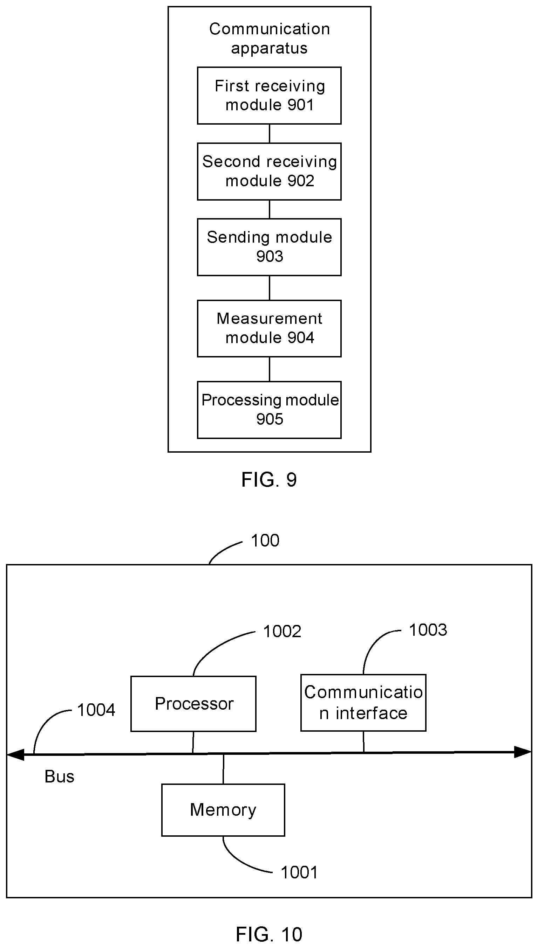

FIG. 9 is a structural schematic diagram of another communication apparatus provided by the embodiments of the present disclosure, and the communication apparatus may execute the reference signal configuration information receiving methods provided by the aforementioned method embodiments. As shown in FIG. 9, the communication apparatus includes: a first receiving module 901 and a second receiving module 902.

The first receiving module 901 is configured to receive reference signal configuration information. The second receiving module 902 is configured to receive a reference signal according to the reference signal configuration information.

In some embodiments, the above apparatus further includes: a sending module 903. The sending module 903 is configured to send port description information.

In some embodiments, the sending module 903 is specifically configured to send port description information by sending a higher layer signaling and/or a physical layer signaling.

In some embodiments, the sending module 903 is specifically configured to send port description information by send at least one of: a model identifier; model description information; a function identifier; or function description information.

In some embodiments, the port description information includes at least one of: a port set pattern, a port index list of a first port set, a port index list of at least one second port set, a number of ports of the first port set, a number of ports of at least one second port set, at least one downsampling factor, description information of at least one second port set.

In some embodiments, the number of ports of the first port set is greater than a number of ports of a second port set.

In some embodiments, the port description information includes one of: a number of ports N of the first port set and K a numbers of ports M of second port sets; a number of ports N of the first port set and K downsampling factors O; K numbers of ports M of second port sets and K downsampling factors O; K numbers of ports M of second port sets; K downsampling factors O; where N, M, O, and K are positive integers.

In some embodiments, the port description information includes one of: a number of ports (N₁, N₂) of the first port set and K numbers of ports (M₁, M₂) of second port sets; a number of ports (N₁, N₂) of the first port set and K downsampling factors (O₁, O₂); K numbers of ports (M₁, M₂) of second port sets and K downsampling factors (O₁, O₂); K numbers of ports (M₁, M₂) of second port sets; K downsampling factors (O₁, O₂); where N₁, N₂, M₁, M₂, O₁, O₂, and K are positive integers.

In some embodiments, the port description information includes one of: a number of ports (N₁, N₂, N₃) of the first port set and K numbers of ports (M₁, M₂, M₃) of second port sets; a number of ports (N₁, N₂, N₃) of the first port set and K downsampling factors (O₁, O₂, O₃); K numbers of ports (M₁, M₂, M₃) of second port sets and K downsampling factors (O₁, O₂, O₃); K numbers of ports (M₁, M₂, M₃) of second port sets; K downsampling factors (O₁, O₂, O₃); where N₁, N₂, N₃, M₁, M₂, M₃, O₁, O₂, O₃, and K are positive integers.

In some embodiments, the port description information includes description information of at least one second port set, including at least one of: K numbers of ports of second port sets, a mapping relationship from K second port sets to the first port set, K downsampling factors, K models, K model identifiers, K functions, or K function identifiers, where K is an integer greater than or equal to 1.

In some embodiments, the port description information further includes: port index offset information; where the port index offset information is used to indicate a starting port index of the second port set.

In some embodiments, the port description information further includes: a number of receive ports; a receive port identifier; a reference signal precoding enable identifier.

In some embodiments, the port set pattern is determined based on an index of at least one second port set, where the second port set is determined according to at least one of the following rules: the second port set includes at least two ports, and index intervals of the at least two ports are identical; the second port set includes at least one port in each polarization direction, and index intervals of the at least one port in each polarization direction are identical; the second port set includes ports in at least two rows and two columns, and index intervals of ports in each dimension are identical; the second port set includes ports in at least two rows and two columns in each polarization direction; the second port set includes at least two ports in each dimension, and index intervals of the at least two ports in each dimension are identical; or the second port set includes at least one port on each CDM group of a first port set.

In some embodiments, a port index list of the second port set is a subset of a port index list of a first port set.

In some embodiments, the reference signal configuration information at least includes port description information.

In some embodiments, the reference signal configuration information includes at least one of: a reference signal type; a precoding enable identifier; an indication of a time-domain index set and/or a frequency-domain index set for carrying a reference signal resource; a model identifier; model description information; a function identifier; function description information.

In some embodiments, the above apparatus further includes: a measurement module 904 and a processing module 905. The measurement module 904 is configured to measure a reference signal to obtain first channel information; the processing module 905 is configured to determine an information processing manner according to acquired port description information, and process the first channel information according to the determined information processing manner to obtain second channel information.

In some embodiments, the second receiving module 902 is specifically configured to receive reference signals corresponding to at least two port set patterns on different slots; or, receive reference signals corresponding to at least two port set patterns on different resource blocks.

In a case where the functions of the above integrated modules are implemented in hardware, the embodiments of the present disclosure provide another possible structure of the communication apparatus involved in the above embodiments. As shown in FIG. 10, the communication apparatus 100 includes: a processor 1002, a bus 1004. Optionally, the communication apparatus may further include a memory 1001; optionally, the communication apparatus may further include a communication interface 1003.

The processor 1002 may be configured to implement or execute various exemplary logic blocks, modules, and circuits described in conjunction with the embodiments of the present disclosure. The processor 1002 may be a central processing unit, a general purpose processor, a digital signal processor, an application specific integrated circuit, a field programmable gate array, or other programmable logic device, transistor logic device, hardware component, or any combination thereof. The processor 1002 may implement or execute various exemplary logic blocks, modules, and circuits described in conjunction with the embodiments of the present disclosure. The processor 1002 may also be a combination for implementing computing functions, for example, including a combination of one or more microprocessors, a combination of a Digital Signal Processor (DSP) and a microprocessor, and the like.

The communication interface 1003 is configured to connect with other devices through a communication network. The communication network may be an Ethernet, a wireless access network, a wireless local area network (WLAN), or the like.

The memory 1001 may be a read-only memory (ROM) or other types of static storage devices that can store static information and instructions, a random access memory (RAM) or other types of dynamic storage devices that can store information and instructions, or an electrically erasable programmable read-only memory (EEPROM), a disk storage medium or other magnetic storage devices, or any other media that can be used to carry or store desired program code in the form of instructions or data structures and can be accessed by a computer, which is however not limited thereto.

As a possible implementation, the memory 1001 may exist independently of the processor 1002, and the memory 1001 may be connected to the processor 1002 through the bus 1004 for storing instructions or program code. When the processor 1002 calls and executes the instructions or program code stored in the memory 1001, the processor 1002 can implement the reference signal configuration information sending and receiving method provided by the embodiments of the present disclosure.

In another possible implementation, the memory 1001 may also be integrated with the processor 1002.

The bus 1004 may be an extended industry standard architecture (EISA) bus or the like. The bus 1004 may be classified into an address bus, a data bus, a control bus, and the like. For ease of representation, only one thick line is used in FIG. 10 to represent the bus, but it does not mean that there is only one bus or one type of bus.

In some embodiments, the memory 1001 stores executable instructions, and when the processor 1002 executes the executable instructions, the communication apparatus is caused to perform the reference signal configuration information sending and receiving method as described in any one of the above embodiments.

Some embodiments of the present disclosure provide a computer-readable storage medium (for example, a non-transitory computer-readable storage medium), where the computer-readable storage medium stores computer program instructions, and when the computer program instructions are run on a computer, the computer is caused to perform the reference signal configuration information sending and receiving method as described in any one of the above embodiments.

Exemplarily, the above computer-readable storage medium may include, but is not limited to: magnetic storage devices (e.g., a hard disk, a floppy disk, or a magnetic tape, etc.), optical disks (e.g., a compact disk ( CD), a digital versatile disk (DVD), etc.), smart cards, and flash memory devices (e.g., an erasable programmable read-only memory (EPROM), a card, a stick, or a key drive, etc.). The various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

The embodiments of the present disclosure provide a computer program product containing instructions, where when the computer program product runs on a computer, the computer is caused to execute the reference signal configuration information sending and receiving method described in any of the foregoing embodiments.

The foregoing is only the specific embodiments of the present disclosure, but the protection scope of the present disclosure is not limited thereto, and any changes or substitutions within the technical scope disclosed in the present disclosure should be covered within the protection scope of the present disclosure. Therefore, the protection scope of the present disclosure shall be determined based on the protection scope of the claims.

## Claims

1. A reference signal configuration information sending method, applied to a first node, wherein the method comprises:
acquiring port description information;
generating reference signal configuration information according to the port description information;
sending the reference signal configuration information.

2. The method according to claim 1, wherein the acquiring the port description information comprises:
acquiring the port description information by receiving a higher layer signaling and/or a physical layer signaling.

3. The method according to claim 1, wherein the acquiring the port description information comprises acquiring the port description information by receiving at least one of:
a model identifier; model description information; a function identifier; or function description information.

4. The method according to claim 1, wherein the port description information comprises at least one of: a port set pattern, a port index list of a first port set, a port index list of at least one second port set, a number of ports of a first port set, a number of ports of at least one second port set, at least one downsampling factor, or description information of at least one second port set.

5. The method according to claim 4, wherein the number of ports of the first port set is greater than a number of ports of a second port set.

6. The method according to claim 1, wherein the port description information comprises one of:
a number of ports N of a first port set and K numbers of ports M of second port sets;
a number of ports N of a first port set and K downsampling factors O;
K numbers of ports M of second port sets and K downsampling factors O;
a number of ports M of K second port sets;
K downsampling factors O;
wherein N, M, O, and K are positive integers.

7. The method according to claim 1, wherein the port description information comprises one of:
a number of ports (N₁, N₂) of a first port set and K numbers of ports (M₁, M₂) of second port sets;
a number of ports (N₁, N₂) of a first port set and K downsampling factors (O₁, O₂);
K numbers of ports (M₁, M₂) of second port sets and K downsampling factors (O₁, O₂);
K numbers of ports (M₁, M₂) of second port sets;
K downsampling factors (O₁, O₂);
wherein N₁, N₂, M₁, M₂, O₁, O₂, and K are positive integers.

8. The method according to claim 1, wherein the port description information comprises one of:
a number of ports (N₁, N₂, N₃) of a first port set and K numbers of ports (M₁, M₂, M₃) of second port sets;
a number of ports (N₁, N₂, N₃) of a first port set and K downsampling factors (O₁, O₂, O₃);
K numbers of ports (M₁, M₂, M₃) of second port sets and K downsampling factors (O₁, O₂, O₃);
K numbera of ports (M₁, M₂, M₃) of second port sets;
K downsampling factors (O₁, O₂, O₃);
wherein N₁, N₂, N₃, M₁, M₂, M₃, O₁, O₂, O₃, and K are positive integers.

9. The method according to claim 4, wherein the port description information comprises description information of at least one second port set, including at least one of:
K numbers of ports of second port sets, a mapping relationship from K second port sets to a first port set, K downsampling factors, K models, K model identifiers, K functions, or K function identifiers, wherein K is an integer greater than or equal to 1.

10. The method according to claim 4, wherein the port description information further comprises:
port index offset information; wherein the port index offset information is used to indicate a starting port index of the second port set.

11. The method according to claim 1, wherein the port description information further comprises:
a number of receive ports;
a receive port identifier;
a reference signal precoding enable identifier.

12. The method according to claim 4, wherein the port set pattern is determined according to an index of at least one second port set, wherein the second port set is determined according to at least one of the following rules:
the second port set comprises at least two ports, and index intervals between the at least two ports are identical;
the second port set comprises at least one port in each polarization direction, and index intervals between the at least one port in each polarization direction are identical;
the second port set comprises ports in at least two rows and two columns, and index intervals between ports in each dimension are identical;
the second port set comprises ports in at least two rows and two columns in each polarization direction;
the second port set comprises at least two ports in each dimension, and index intervals between the at least two ports in each dimension are identical; or
the second port set comprises at least one port on each CDM group of a first port set.

13. The method according to claim 4, wherein a port index list of a second port set is a subset of a port index list of a first port set.

14. The method according to claim 1, wherein the reference signal configuration information at least comprises port description information.

15. The method according to claim 1, wherein the reference signal configuration information at least comprises at least one of:
a reference signal type;
a reference signal precoding enable identifier;
an indication of a time domain index set and/or frequency domain index set for carrying a reference signal resource;
a model identifier; model description information; a function identifier; function description information.

16. The method according to claim 1, wherein the method further comprises:
sending a reference signal according to the reference signal configuration information.

17. The method according to claim 16, wherein the sending the reference signal according to the reference signal configuration information comprises one of:
sending reference signals corresponding to at least two port set patterns on different slots;
sending reference signals corresponding to at least two port set patterns on different resource blocks.

18. A reference signal configuration information receiving method, applied to a second node, wherein the method comprises:
receiving reference signal configuration information; and receiving a reference signal according to the reference signal configuration information.

19. The method according to claim 18, wherein, before receiving the reference signal configuration information, the method further comprises:
sending port description information.

20. The method according to claim 19, wherein the sending the port description information comprises:
sending the port description information by sending a higher layer signaling and/or a physical layer signaling.

21. The method according to claim 19, wherein the sending the port description information comprises:
sending the port description information by sending at least one of:
a model identifier; model description information; a function identifier; or function description information.

22. The method according to claim 19, wherein the port description information comprises at least one of: a port set pattern, a port index list of a first port set, a port index list of at least one second port set, a number of ports of a first port set, a number of ports of at least one second port set, at least one downsampling factor, description information of at least one second port set.

23. The method according to claim 22, wherein the port set pattern is determined according to an index of at least one second port set, wherein the second port set is determined according to at least one of the following rules:
the second port set comprises at least two ports, and index intervals between the at least two ports are identical;
the second port set comprises at least one port in each polarization direction, and index intervals between the at least one port in each polarization direction are identical;
the second port set comprises ports in at least two rows and two columns, and index intervals between ports in each dimension are identical;
the second port set comprises ports in at least two rows and two columns in each polarization direction;
the second port set comprises at least two ports in each dimension, and index intervals between the at least two ports in each dimension are identical; or
the second port set comprises at least one port on each CDM group of a first port set.

24. The method according to claim 22, wherein a port index list of a second port set is a subset of a port index list of a first port set.

25. The method according to claim 18, wherein the reference signal configuration information at least comprises port description information.

26. The method according to claim 18, wherein the reference signal configuration information at least comprises at least one of:
a reference signal type;
a precoding enable identifier;
a time domain index set and/or frequency domain index set indication for carrying a reference signal resource; or
a model identifier; model description information; a function identifier; function description information.

27. The method according to claim 18, wherein the method further comprises:
measuring the reference signal to obtain first channel information;
determining an information processing manner according to acquired port description information, and processing the first channel information according to the determined information processing manner determined to obtain second channel information.

28. The method according to claim 18, wherein the receiving the reference signal according to the reference signal configuration information comprises one of:
receiving reference signals corresponding to at least two port set patterns on different slots;
receiving reference signals corresponding to at least two port set patterns on different resource blocks.

29. A communication apparatus, comprising: a processor and a memory for storing instructions executable by the processor;
wherein the processor is configured to execute the instructions, to enable the communication apparatus to perform the reference signal configuration signal sending method according to any one of claims 1-17, or the reference signal configuration information receiving method according to any one of claims 18-28.

30. A computer-readable storage medium having computer instructions stored thereon, wherein the computer instructions, upon being run on a communication apparatus, enable the communication apparatus to perform the reference signal configuration signal sending method according to any one of claims 1-17, or the reference signal configuration information receiving method according to any one of claims 18-28.
